# NEUE EUROPÄISCHE PATENTSCHRIFT

(11) **EP 0 463 437 B2**
(45) Veröffentlichungstag und Bekanntmachung des Hinweises auf die Entscheidung über den Einspruch: **02.12.1998**
(45) Hinweis auf die Patenterteilung: 08.02.1995
(21) Anmeldenummer: 91109413.4
(22) Anmeldetag: 08.06.1991
(51) Int. Cl.: C04B 35/46

(54) **Sinterformkörper auf Basis von Aluminiumtitanat, Verfahren zu ihrer Herstellung sowie deren Verwendung**
Sintered bodies based on aluminium titanate, process for their production and use thereof
Corps fritté moulé à base de titanate d'aluminium, procédé de fabrication et utilisation

(30) Priorität: 22.06.1990 DE 4019862; 14.09.1990 DE 4029166
(43) Veröffentlichungstag der Anmeldung: 02.01.1992
(73) Patentinhaber: BAYER AG, 51368 Leverkusen (DE)
(72) Erfinder: Freudenberg, Bernard, Dr., W-8630 Coburg (DE); Seyer, Johannes, Dipl.-Ing., W-8633 Rödenthal (DE); Gugel, Ernst, Prof. Dr., W-8633 Rödenthal (DE)

(56) Entgegenhaltungen:
- EP-A- 285 312
- EP-A- 0 133 021
- EP-A- 0 210 813
- DE-A- 2 750 290
- DE-A- 3 827 646
- FR-A- 2 408 557
- US-A- 4 277 539
- US-A- 5 008 222
- W.Lingenberg: Werkstoffeigenschaften von Aluminium Titanate unter besonderer Berücksichtigung von Bildungs- und Zerfallreaktionen. Dissertation TU Clausthal, Jun1 1985, S. 1-165
- Hanes Walter; Aluminiumtitanate als Basis für temperaturwechselbeständige Werkstoffe; Silikattechnik 21, 1970, 304-306
- P. Nützenadel: Tialit, ein Keramischer Werkstoff mit guter TWB; Feiberger Forschungsheft A604, Leipzig 1979, 7-41
- D'Ans Lax: Taschenbuch für Chemiker und Physiker, B.1, 1967, S.1-667 und 1-675
- Salmang/Scholze; Die physikalischen und chemischen Grundlagen der Keramik, 9. Auflage; Berlin 1968, S. 210-211, 216-219, 282-283

## Beschreibung

Die Vorliegende Erfindung betrifft Sinterformkörper auf der Basis der Hauptphasen dotierten Aluminiumtitanat und Mullit mit einer Zusammensetzung
50 - 61,5 Gew.-% Al₂O₃,
36 - 47,5 Gew.-% Titanoxid, berechnet als TiO₂,
2,5- 5 Gew.-% SiO₂,
wobei die Summe der drei Komponenten 100 % ergibt, und bis zu 1 Gew.-% Verunreinigungen enthält, sowie Verfahren zur Herstellung dieser Sinterformkörper und deren Verwendung.

In der Verfahrenstechnik und insbesondere in der Schmelzmetallurgie werden Werkstoffe benötigt, welche auch unter extrem reduzierenden Bedingungen ihre thermomechanischen Eigenschaften, insbesondere Festigkeit und Thermoschockbeständigkeit, beibehalten.

Keramik auf der Basis von reinem Aluminiumtitanat oder Tialit, zeigt zwar interessante Eigenschaften, wie einen kleinen Wärmeausdehnungskoeffizienten (WAK) und einen kleinen E-Modul. Jedoch sind diese technologisch nur bedingt verwertbar aufgrund der sehr geringen Festigkeit und der Zersetzungsneigung im Temperaturbereich von ca. 900 - 1300°C. In diesem Temperaturintervall zerfällt Tialit in die Ausgangsoxide Al₂O₃ und TiO₂, was einhergeht mit einem starken Anstieg des WAK und einer entsprechend unzureichenden Thermoschockbeständigkeit.

Es sind zahlreiche Versuche bekannt geworden, dieser Zerfallsneigung zu begegnen. So wird in der US-A 2 776 896 auf die stabilisierende Wirkung von Eisen-Lösungen im Al₂TiO₅ hingewiesen. SiO₂ und MgO zeigen ebenfalls einen stabilisierenden Effekt, der jedoch nicht so ausgeprägt ist wie bei dem bevorzugten Fe₂O₃-Zusatz. Es wird jedoch darauf hingewiesen, daß SiO₂- und MgO-Zusätze für die Stabilisierung verwendet werden können, wenn die elektrischen Eigenschaften, die Farbe oder die Reduktionsanfälligkeit des eisenhaltigen Aluminiumtitanates unerwünscht sind.

Die Überlegenheit der Eisenstabilisierung wird auch in der DE-A 3 814 079 beschrieben. Hiernach ist eine ausreichende Fe₂O₃-Konzentration für eine Langzeitstabilisierung verantwortlich.

Dies gilt nicht mehr, wenn man die Stabilität von Aluminiumtitanat unter stark reduzierenden oder wechselnden Atmosphären untersucht. So zeigt eine ausschließlich mit Fe₂O₃-Zusätzen stabilisierte Al₂TiO₅-Keramik bei 1050° C unter reiner CO-Atmosphäre Zerfallserscheinungen.

Der vorliegenden Erfindung liegt die Aufgabenstellung zugrunde, eine kostengünstige Aluminiumtitanat-Keramik zur Verfügung zu stellen, welche bei Temperaturen ≧ 1000° C sowohl unter stark reduzierenden (z.B. CO) als auch oxidierenden Bedingungen (z.B. Luft) ausreichende Zerfallsbeständigkeit aufweist, um seine thermomechanischen Eigenschaften, insbesondere Festigkeit und Thermoschockbeständigkeit, beizubehalten.

Nach dem Stand der Technik gibt es nur in beschränktem Umfang Hinweise zur Verbesserung der Reduktionsanfälligkeit von Almuminiumtitanat-Keramik. So werden in der US-A 4 118 240 die Zusätze 1,5 - 10 Gew.-% SnO₂ und 2 - 13 Gew.-% SiO₂ bzw. 0,5 - 10 Gew.-% Seltenerdoxid und 2 - 13 Gew.-% SiO₂ beschrieben. Diese Proben sollen eine verbesserte Zerfallsbeständigkeit auch unter reduzierenden Bedingungen aufweisen. Die Raumtemperaturbiegefestigkeiten liegen nur im Bereich von 18 - 35 MPa.

Wesentlich umfangreicher ist die Patentliteratur bezüglich SiO₂, MgO- und Fe₂O₃-haltiger Aluminiumtitanat-Keramik, ohne daß jedoch Lösungsansätze bezüglich obiger Aufgabenstellung ersichtlich wären.

Die EP-B 37 868 beschreibt eine Aluminiumtitanatkeramik, die 1 - 20 Gew.-% SiO₂ (bevorzugt 2 - 15 Gew.-%), 1,2 - 20 Gew.-% MgO (bevorzugt 2 - 17 Gew.%) und 0,5 - 20 Gew.-% Fe₂O₃ (bevorzugt 2- 10 Gw.-%) enthält. Es werden Raumtemperaturbiegefestigkeiten von nur 7 - 35 MPa gemessen.

Die EP-A 210 813 beschreibt eine glasarme Aluminiumtitanat-Mullit-Keramik mit mindestens einer vorsynthetisierten Komponente, das sind Aluminiumtitanat und/oder Mullit. Die Keramik enthält mindestens 1,2 Gew.-% Fe₂O₃.Bei einem maximalen MgO-Gehalt von 0,8 Gew.-% beträgt das MgO/Fe₂O₃-Verhältnis ≧ 0,67. Eine Zerfallsresistenz unter stark reduzierenden Bedingungen ist nicht gewährleistet.

Gemäß der DD-B 29 794 wird eine Aluminiumtitanat-Keramik beansprucht mit den Zusätzen von 0 - 40 Gew.-% SiO₂ und 0 - 20 Gew.-% MgO. Außerdem können 0,05 - 15 Gew.-% der Oxide Zn, Ca, Ba, Fe, Ni, Cu, Mn und Cr zugegeben werden. Im Beispiel 4 werden 20 Gew.-% MgO und 1,5 Gew.-% Fe₂O₃ zugesetzt, was eine Keramik mit technisch unbedeutender Festigkeit ergibt.

Die DE-C 2 750 290 beschreibt eine silikatische Aluminiumtitanat-Keramik, hergestellt aus einer Rohstoffmischung mit 2 - 5 Gew.-% Kaolin und 0,1 -1 Gew.-% Magnesiumsilikat. Unter der Annahme, daß es sich beim Magnesiumsilikat um Sepiolith handelt (Sp. 4, Z. 36), entspricht das einem SiO₂-Gehalt von 1,0 -2,9 Gew.-% und einem MgO-Gehalt von 0,025 - 0,25 Gew.-%. Der zwischen 1350 und 1450°C gebrannte Werkstoff weist Festigkeiten von 30 - 40 MPa (Beispiel 4 und 5), einen E-Modul von ca. 13 GPa und einen WAK (Meßbereich 25 - 1000°C) von 1,3 - 1,5 x 10⁻⁶ 1/K auf. Bezüglich der Zerfallsbeständigkeit unter reduzierenden oder oxidierenden Bedingungen werden keine quantitativen Angaben gemacht.

In der DE-A 3 644 664 wird eine Aluminiumtitanat-Keramik mit vier Additiven beschrieben: 2,5 - 3,0 Gew.-% SiO₂, 0,5 - 1,0 Gew.-% MgO, 0,1 - 1,5 Gew.-% Fe₂O₃ (bevorzugt 0,5 - 1 Gew.-%) und 0,1 - 2,5 Gew.-% La₂O₃ (bevorzugt 0,5 - 2,0 Gew.-%). Das angeführte Beispiel enthält 2,56 Gew.-% SiO₂, 0,74 Gew.-% MgO, 0,74 Gew.-% Fe₂O₃ und 1,96 Gew.-% La₂O₃. Nach der Temperung 100 h bei 1100°C ohne Angabe der Atmosphäre enthält diese Keramik noch 61 % Al₂TiO₅. Unter reduzierenden Bedingungen ist diese Keramik jedoch nicht ausreichend zerfallsresistent.

Überraschenderweise wurde nun ein Sinterformkörper auf der Basis von Aluminiumtitanat gefunden, der die Aufgabenstellung einer verbesserten Zerfallsbeständigkeit sowohl unter stark reduzierenden als auch oxidierenden Bedingungen in hervorragender Weise erfüllt. Er muß dabei nur die zwei kostengünstigen Zusätze aus dem System Silicium und Magnesium aufweisen.

Der nachfolgend beschriebene erfindungsgemäße Werkstoff, hergestellt durch sorgfältige Auswahl der Zusammensetzung und einer angepaßten Prozeßführung, insbesondere beim Sintern, erfüllt alle oben aufgezählten technischen und wirtschaftlichen Anforderungen.

Gegenstand dieser Erfindung sind Sinterformkörper auf der Basis der Hauptphasen dotiertes Aluminiumtitanat und Mullit mit einer Zusammensetzung
50 - 61,5 Gew.-% Al₂O₃,
36 - 47,5 Gew.-% Titanoxid, berechnet als TiO₂,
2,5 - 5 Gew.-% SiO₂,
wobei die Summe der drei Komponenten 100 % ergibt, und bis zu 1 Gew.-% Verunreinigungen und wobei der Sinterformkörper zusätzlich 0,3 - 0,6 Gew.-% MgO und zusätzlich einen Eisenoxidgehalt, der aus eisenhaltigen Schicht-Silikaten stammt, von 0,015 - 0,5 Gew %, berechnet als Fe₂O₃ aufweist, und die Summe der Gehalte an unreagiertem Al₂O₃ und TiO₂ ≤ 2,5 Gew % beträgt enthält.

Der erfindungsgemäße Werkstoff besteht im gebrannten Zustand im wesentlichen aus zwei kristallinen Phasen: einem Mg-dotierten Al₂TiO₅-Kristall und der Mullitphase, welche als 3Al₂O₃·2SiO₂ angenommen wird.

Dabei ist der optimale MgO-Gehalt ein Kompromiß zwischen den Forderungen nach maximaler Zerfallsbeständigkeit, maximaler Bruchdehnung und minimaler Brennschwindung.

Überraschenderweise wurde gefunden, daß die Zerfallsbeständigkeit reduzierend bei Mg-Konzentrationen (gerechnet als MgO) unterhalb von 0,3 Gew.-% deutlich abfällt, während die Zerfallsbeständigkeit oxidierend im untersuchten Bereich nahezu konstant bleibt. Bei MgO-Gehalten oberhalb 1 Gew.-% fällt die Bruchdehnung weiter ab. Eine hohe Bruchdehnung ist jedoch entscheidend für die geforderte Thermoschockbeständigkeit. Zudem steigt die Sintergeschwindung weiter an; je höher die Sinterschwindung, umso schwieriger ist es, die engen Toleranzen mit "as-fired" Bauteilen einzuhalten.

Zahlreiche Zerfallsversuche haben gezeigt, daß erhöhte Eisenkonzentrationen zwar die Zerfallsbeständigkeit oxidierend verbessern, gleichzeitig aber die Zerfallsbeständigkeit reduzierend verschlechtern. In einer besonders bevorzugten Ausführungsform enthält der erfindungsgemäße Sinterformkörper einen Eisenoxidgehalt von 0,05 bis 0,4 Gew.-%, und berechnet als Fe₂O₃. Das Verhältnis der Gew.-% von MgO/Fe₂O₃ beträgt vorzugsweise zwischen 20 und 2.

Auch der SiO₂-Gehalt stellt einen Kompromiß dar zwischen verschiedenen Forderungen, als da sind maximale Zerfallsbeständigkeit sowie minimaler E-Modul und minimaler Wärmeausdehnungskoeffizient. Mit steigendem SiO₂-Gehalt nimmt sowohl der WAK als auch der E-Modul zu, so daß die Thermoschockbeständigkeit verschlechert wird. Von daher ergibt sich 5 Gew.-% SiO₂ als obere Grenze. Die Untergrenze beträgt aufgrund der schlechten Zufallsbeständigkeit oxidierend 2,5 Gew.-%, bevorzugt 3 Gew.-%.

Besonders gute Zerfallsbeständigkeiten werden bei erfindungsgemäßen Sinterkormkörpern angetroffen, bei denen die Summe der Gehalte an unreagiertem Al₂O₃ und TiO₂ ≦ 2,5 Gew.-% beträgt.

Die erfindungsgemäßen Sinterformkörper zeichnen sich durch eine Kombination besonders guter physikalischer Eigenschaften aus. So liegt ihre Raumtemperaturbiegefestigkeit im Bereich von 40 bis 80 MPa, der E-Modul zwischen 5 und 25 GPa, der WAK (RT-1000°C) liegt im Bereich von 0-2,5 x 10⁻⁶ 1/K. Auch nach mehr als 100 Stunden bei 1000°C sowohl unter oxidierenden als auch reduzierenden Bedingungen ist die Zerfallsresistenz gegeben. Die Zeitraffer-Zerfallstests oxidierend und reduzierend ergeben einen Tialitgehalt von mehr als 60 Gew.-% nach oxidierendem Zerfallstest und mehr als 75 Gew.-% nach reduzierendem Zerfallstest.

Weiterhin vorteilhaft und charakteristisch ist die Tatsache, daß die erfindungsgemäßen Sinterformkörper bei relativ niedrigen Sintertemperaturen mit kurzen Haltezeiten gebrannt werden können. Der Sinterformkörper wird bei Temperaturen zwischen 1250 und 1600°C, bevorzugt zwischen 1300 und 1450°C, mit einer Haltezeit zwischen 0,5 und 100 h, bevorzugt zwischen 1 und 50 h gesintert.

Gegenstand dieser Erfindung ist auch ein Verfahren zur Herstellung der erfindungsgemäßen Sinterformkörper. Dieses ist dadurch gekennzeichnet, daß es das Mischen, die Formgebung und das Sintern geeigneter Materialien umfaßt.

Die Formgebung kann in bekannter Weise über den Schlickerguß erfolgen. Ebenso kann die Formgebung durch Formen und Pressen einer die erfindungsgemäße Zusammensetzung aufweisenden Pulvermischung geschehen, welche die üblichen Bindemittel enthält. Als besonders vorteilhaft erweist sich die Verwendung der durch Naßmahlung vordispergierten Rohstoffe mit anschließender Granulationstrocknung, wobei die Rohstoffe vor der Granulationstrocknung entweder einzeln naßgemahlen und anschließend gemischt oder gemeinsam in Form einer Mischung naßgemahlen werden können. Diese Granulate ermöglichen wesentlich kürzere Dispergierzeiten bei der Schlickerherstellung als bei Verwendung der Einzelkomponenten. Daneben ergibt sich durch das Vorliegen nur einer vorgemischten Komponente eine vereinfachte Lagerhaltung sowie eine bessere Dosierbarkeit als bei Verwendung mehrerer Komponenten mit unterschiedlichem Schüttgewicht.

Darüber hinaus sind die getrockneten Granulate besonders geeignet zum Trockenpressen.

Eine besonders bevorzugte Variante des erfindungsgemäßen Verfahrens besteht also darin, daß die Komponenten einzeln oder als Mischung mittels Naßmahlung, bevorzugt mittels Perlmahlung, vordispergiert werden und die Mischung der naßgemahlenen Komponenten anschließend mittels Granulationstrocknung, bevorzugt mittels Sprühtrocknung, weiter verarbeitet und als Rohstoff verwendet wird.

Die Sinterung erfolgt bevorzugt als Reaktionssinterprozeß gemäß den obengenannten Sinterbedingungen. Es können auch vorreagierte Mischungen ohne Nachteil eingesetzt werden. Nach dem Sinterprozeß kann der Sinterformkörper unter Einsatz bekannter Verfahren bearbeitet werden.

In besonders vorteilhafter Weise werden die Magnesiumverbindungen als Magnesiumtitanate wie Mg₂TiO₄, MgTiO₃ und/oder MgTiO₅ eingebracht. In der Praxis erlaubt die Verwendung von Magnesiumtitanat einen Schlicker mit höherem Feststoffgehalt bei reduzierter Strukturviskosität. Ein weiterer Vorteil bei der Verwendung von Magnesiumtitanat-Pulver ist in der hohen Reaktivität zu sehen. Ein weiterer Vorteil des synthetischen Magnesiumtitanats gegenüber natürlichen Rohstoffen ist dessen Reinheit. Die natürlichen Rohstoffe enthalten insbesondere Alkali-und Calcium-Verunreinigungen, welche bei Aluminiumtitanatkeramik zu einer reduzierten Zerfallsbeständigkeit führen.

In einer bevorzugten Ausführungsform des erfindungsgemäßen Verfahrens wurden die Eisenverbindungen als eisenhaltige Schichtsilikate, besonders bevorzugt als eisenhaltige Tone bzw. Kaolin, in die Mischung eingebracht.

Beim Vergleich von verschiedenen Eisen-Rohstoffquellen erweisen sich inbesondere eisenhaltige Tone bzw. Kaoline als vorteilhaft. Ein besonderer Vorteil von natürlichen Aluminiumsilikaten ist, daß die Tone/Kaoline zusätzlich eine äußerst kostengünstige SiO₂- unf Al₂O₃-Rohstoffquelle darstellen.

Gegenstand der Erfindung ist auch die Verwendung der erfindungsgemäßen Sinterformkörper.

Besonders geeignet sind sie zur Herstellung von hohen rohrartigen Metall-Keramik-Verbundkörpern. Ebenso sind sie geeignet zur Bewehrung von Motorkolben und Zylinderkopf und als Einbauelement im Kalysator z.B. als Distanzring.

Eine weitere Verwendung liegt in ihrem Einsatz, gegebenenfalls nach Dotierung mit katalytisch wirkenden Substanzen, als Katalysatorträger.

Eine weitere Verwendung ist der Einsatz, gegebenenfalls nach Dotierung mit katalytisch wirkenden Substanzen und Zusatz von Porosierungshilfen, als Filter, insbesondere als Partikelfilter im Dieselmotor.

Aufgrund ihrer guten thermischen und mechanischen Eigenschaften sind die erfindungsgemäßen Sinterstoffe ebenso als Werkstoff in der Schmelzmetallurgie einsetzbar.

Im folgenden wird die Erfindung beispielhaft erläutert.

### Beispiele

Versätze mit verschiedenen MgO-Konzentrationen wurden verglichen. Als Rohstoffe wurden eingesetzt Al₂O₃-Pulver (Korund, d₅₀ < 0,5 µm), TiO₂-Pulver (Rutil, d₅₀ < 0,5 µm), MgTiO₃-Pulver (d₅₀ < 0,8 µm) und ein eisenhaltiger Kaolin, Versatzberechnung entsprechend der Zusammensetzung in Tabelle I. Die Pulver wurden nach Zugabe von 30 Gew.-% Wasser und handelsüblichen Verflüssigern 12 h zu einem Schlicker gemahlen. Die schlickergegossenen Hohlkörper wurden getrocknet und anschließend 5 h bei 1440°C gebrannt. Die quantitative Phasenanalyse mittels Röntgendiffraktometrie erfolgte am gebrannten Scherben sowie nach einem zusätzlichen Zerfallstest oxidierend (40 h, 1100°C, Luft stehend) bzw. nach einem Zerfallstest reduzierend (20 h, 1050°C, CO-Atmosphäre, strömend). Unter Annahme von Gleichgewichtsbedingungen entspricht die reduzierende Atmosphäre einen Sauerstoffpartialdruck p₀₂ ≈ 10⁻¹⁸ atm. Die Bruchdehnung wurde aus der Raumtemperatur-Biegefestigkeit und dem statischen E-Modul berechnet. Die lineare Sinterschwindung wurde aus den Grün- und Sinterdichten errechnet.

Den Ergebnissen in Tabelle I ist zu entnehmen, daß die Zerfallsbeständigkeit reduzierend unterhalb 0,3 Gew.-% MgO stark abfällt, im Gegensatz von Zerfallsbeständigkeit oxidierend. Oberhalb von 1 Gew.-% MgO erreichen, die sinkende Bruchdehnung und die steigende Sinterschwindung sehr ungünstige Werte.

**Tabelle I**

| Zerfallsbeständigkeit, Bruchdehnung und Sinterschwindung für Proben mit unterschiedlichem Mg-Gehalt | | | | | |
|---|---|---|---|---|---|
| Beispiel | 1 (Vergleich) | 2 (Vergleich) | 3 | 4 | 5 (Vergleich) |
| Kat.% Mg im Tialit-Gitter | 0,2 | 0,4 | 0,6 | 1,0 | 2,0 |
| Kat.% Fe im Tialit-Gitter | 0,14 | 0,14 | 0,14 | 0,14 | 0,14 |
| Rohstoffe | Al₂O₃, TiO₂ Kaolin (Fe) MgTiO₃ | Al₂O₃, TiO₂ Kaolin (Fe) MgTiO₃ | Al₂O₃, TiO₂ Kaolin (Fe) MgTiO₃ | Al₂O₃, TiO₂ Kaolin (Fe) MgTiO₃ | Al₂O₃, TiO₂ Kaolin (Fe) MgTiO₃ |

| chemische Zusammensetzung [Gew.-%] | | | | | |
|---|---|---|---|---|---|
| Al₂O₃ | 57,67 | 57,35 | 57,02 | 56,38 | 54,76 |
| TiO₂ | 38,72 | 38,93 | 39,14 | 39,56 | 40,61 |
| SiO₂ | 3,48 | 3,48 | 3,48 | 3,47 | 3,46 |
| MgO | 0,13 | 0,24 | 0,36 | 0,59 | 1,17 |
| Fe₂O₃ | 0,16 | 0,16 | 0,16 | 0,16 | 0,16 |
| Sinterbedingungen | 5h/1440° C | 5h/1440° C | 5h/1440° C | 5h/1440° C | 5h/1440° C |

| Al₂TiO₅-Gehalt [Gew.-%] | | | | | |
|---|---|---|---|---|---|
| gebrannt | 91 | 95 | 92 | 90 | 90 |
| Zerfallstest - oxidierend | 80 | 78 | 76 | 78 | 82 |
| Zerfallstest - reduzierend | 7 | 77 | 85 | 91 | 86 |
| Bruchdehnung [‰] | 2,9 | 2,6 | 2,4 | 2,4 | 2,1 |
| lineare Sintergeschwindung [%] | 10,6 | 11,5 | 12,3 | 13,1 | 14,2 |

Der Einfluß des MgO/Fe₂O₃-Verhältnisses wird von den Ergebnissen in Tabelle II veranschaulicht.

Die drei angeführten Versätze wurden aus TiO₂-Pulver (Rutil, d₅₀ <0,5 µm), Al₂O₃-Pulver (Korund, d₅₀ <0,5 µm), SiO₂-Pulver (d₅₀ <0,3 µm), MgTiO₃-Pulver (d₅₀ <0,8 µm) und Fe₂O₃-Pulver (d₅₀ <0,3 µm) hergestellt, Zusammensetzungen entsprechend Tabelle II

Alle drei Versätze wurden so berechnet, daß jeweils 0,8 Kat.-%, d.h. 0,8 % aller Kationen im Al₂TiO₅-Gitterdurch Mg bzw. Mg + Fe substituiert werden. Die Berechnung erfolgt unter der vereinfachenden Annahme, daß Mg und Fe ausschließlich im Tialit-Gitter eingebaut werden. Die gezeigten Ergebnisse bestätigen die aus der Literatur bekannte Tatsache, daß bereits geringe Fe-Zusätze eine deutliche Verbesserung der Zerfallsbeständigkeit oxidierend bewirken. Unerwartet ist jedoch, daß diese Zusätze sehr stark die Zerfallsbeständigkeit reduzierend beeinträchtigen.

**Tabelle II**

| Zerfallsbeständigkeit oxidierend und reduzierend für Proben mit unterschiedlichem Mg/Fe-Verhältnis, Mg + Fe [Kat %] = const | | | |
|---|---|---|---|
| Beispiel | 6 (Vergleich) | 7 (Vergleich) | 8 (Vergleich) |
| Kat.% Mg im Al₂TiO₅ Gitter | 0,8 | 0,6 | 0,4 |
| Kat.% Fe im Al₂TiO₅ Gitter | - | 0,2 | 0,4 |
| Rohstoffe | Al₂O₃, TiO₂ SiO₂,MgTiO₃,Fe₂O₃ | Al₂O₃, TiO₂ SiO₂,MgTiO₃,Fe₂O₃ | Al₂O₃, TiO₂ SiO₂,MgTiO₃,Fe₂O₃ |

| chemische Zusammensetzung [Gew.-%] | | | |
|---|---|---|---|
| Al₂O₃ | 55,96 | 56,10 | 56,23 |
| TiO₂ | 40,94 | 40,68 | 40,42 |
| SiO₂ | 2,61 | 2,61 | 2,61 |
| MgO | 0,49 | 0,38 | 0,25 |
| Fe₂O₃ | - | 0,24 | 0,48 |
| Sinterbedingungen | 5h/1400°C | 5h/1400°C | 5h/1400°C |

| Al₂TiO₅-Gehalt [Gew.-%] | | | |
|---|---|---|---|
| gebrannt | 96 | 97 | 94 |
| Zerfallstest oxidierend | 32 | 62 | 68 |
| Zerfallstest reduzierend | 75 | 25 | 4 |

### Einfluß der Fe-Rohstoffquelle

In Tabelle III werden zwei Versätze mit der gleichen globalchemischen Zusammensetzung verglichen. Der Unterschied besteht darin, daß Silicium und Eisen einmal über zwei Rohstoffe -.> 98 %ig reines SiO₂-Pulver (d₅₀ <0,3 µm) und Fe₂O₃-Pulver (d₅₀ <0,3 µm) - und das andere mal über einen einzigen Rohstoff - Kaolin mit 1,5 bis 2 Gew.-% Fe₂O₃ - eingebracht werden. Die Ergebnisse in Tabelle III zeigen, daß das über den Kaolin eingebrachte Eisen eine wesentlich bessere Zerfallsbeständigkeit oxidierend und reduzierend ergibt.

**Tabelle III**

| Zerfallsbeständigkeit oxidierend und reduzierend für Proben mit unterschiedlichen SiO₂- und Fe₂O₃-Rohstoffquellen | | |
|---|---|---|
| Beispiel | 9 (Vergleich) | 3 |
| Kat.% Mg im Al₂TiO₅-Gitter | 0,6 | 0,6 |
| Kat.% Fe im Al₂TiO₅-Gitter | 0,14 | 0,14 |
| Rohstoffe | Al₂O₃, TiO₂, SiO₂,MgTiO₃, Fe₂O₃ | Al₂O₃, TiO₂ Kaolin (Fe), MgTiO₃ |

| chemische Zusammensetzung [Gew.-%] | | |
|---|---|---|
| Al₂O₃ | 56,89 | 57,02 |
| TiO₂ | 39,12 | 39,14 |
| SiO₂ | 3,47 | 3,48 |
| MgO | 0,36 | 0,36 |
| Fe₂O₃ | 0,16 | 0,16 |
| Sinterbedingungen | 5h/1440°C | 5h/1440°C |

| Al₂TiO₅-Gehalt [Gew.-%] | | |
|---|---|---|
| gebrannt | 96 | 92 |
| Zerfallstest-oxidierend | 58 | 76 |
| Zerfallstest-reduzierend | 72 | 85 |

Versätze mit unterschiedlichen SiO₂-Gehalten werden in der Tabelle IV gegenübergestellt. Die zerfallsbeständigkeit unter oxidierenden Bedingungen fällt stark ab bei Si-Gehalten (gerechnet als SiO₂) <2,5 Gew.-%. Dem gegenüber bleibt die Zerfallsbeständigkeit reduzierend unter den gewählten Bedingungen weitgehend konstant. Die genauen Stabilisierungsmechanismen für SiO₂ - wichtig für die Stabilität unter oxidierenden Bedingungen -, und für MgO - wichtig für die Stabilität unter reduzierenden Bedingungen - sind nicht bekannt. Mit steigendem SiO₂-Gehalt nimmt sowohl der WAK als auch der E-Modul zu, so daß die Thermoschockbeständigkeit verschlechtert wird. Von daher ergibt sich 5 Gew.-% SiO₂ als obere Grenze.

**Tabelle IV**

| Zerfallsbeständigkeit, E-Modul und Wärmeausdehnungskoeffizient (WAK) für Proben mit unterschiedlichem SiO₂-Gehalt | | | |
|---|---|---|---|
| Beispiel | 10 (Vergleich) | 3 | 12 (Vergleich) |
| Kat.% Mg im Tialit-Gitter | 0,6 | 0,6 | 0,6 |
| Kat.% Fe im Tialit-Gitter | 0,07 | 0,14 | 0,23 |
| Rohstoffe | Al₂O₃, TiO₂ Kaolin (Fe) MgTiO₃ | Al₂O₃, TiO₂ Kaolin (Fe) MgTiO₃ | Al₂O₃, TiO₂ Kaolin (Fe) MgTiO₃ |

| chemische Zusammensetzung [Gew.-%] | | | |
|---|---|---|---|
| Al₂O₃ | 56,06 | 57,02 | 58,14 |
| TiO₂ | 41,71 | 39,14 | 36,17 |
| SiO₂ | 1,86 | 3,48 | 5,35 |
| MgO | 0,38 | 0,36 | 0,33 |
| Fe₂O₃ | 0,09 | 0,16 | 0,24 |
| Sinterbedingungen | 5h/1440° C | 5h/1440° C | 5h/1440° C |

| Al₂TiO₅-Gehalt [Gew.-%] | | | |
|---|---|---|---|
| gebrannt | 99 | 92 | 85 |
| Zerfallstest - oxidierend | 65 | 76 | 81 |
| Zerfallstest - reduzierend | 94 | 85 | 76 |
| E-Modul [GPa] | 9 | 20 | 27,5 |
| WAK [RT - 1000° C] [10⁻⁶ 1/K] | 0,75 | 1,9 | 2,9 |

Die vorangehenden Versätze wurden berechnet unter den Annahmen, daß sich nur zwei kristalline Phasen bilden, Aluminiumtitanat (Al₂O₃ · TiO₂) und Mullit (3 Al₂O₃ · 2 SiO₂), und daß sich Mg sowie Fe vollständig im Aluminiumtitanat-Gitter lösen. Die Versätze reagieren unter den genannten Bedingungen auch weitgehend durch, so daß bei sorgfältiger Prozeßsteuerung weniger als 5 Gew.-% unreagierte Restoxide (Al₂O₃ + TiO₂) vorlagen. In der Regel liegt der Restoxidgehalt unter 2,5 Gew.-%. Gibt man zusätzlich überschüssiges Aluminiumoxid hinzu, Tabelle V, so wird dadurch der Zerfallsprozeß deutlich beschleunigt.

**Tabelle V**

| Zerfallsbeständigkeit für Proben mit unterschiedlichem Al₂O₃-Überschuß | | | |
|---|---|---|---|
| Beispiel | 3 | 13 (Verglich) | 14 (Vergleich) |
| Kat.% Mg im Tialit-Gitter | 0,6 | 0,6 | 0,6 |
| Kat.% Fe im Tialit-Gitter | 0,14 | 0,14 | 0,14 |
| Al₂O₃-Überschuß [Vol.-%] berechnet | 0 | 1,5 | 5 |
| Rohstoffe | Al₂O₃, TiO₂, Kaolin (Fe),MgTiO₃ | Al₂O₃, TiO₂, Kaolin (Fe),MgTiO₃ | Al₂O₃, TiO₂ Kaolin (Fe), MgTiO₃ |

| chemische Zusammensetzung [Gew.-%] | | | |
|---|---|---|---|
| Al₂O₃ | 57,02 | 57,73 | 59,37 |
| TiO₂ | 39,14 | 38,49 | 37,00 |
| SiO₂ | 3,48 | 3,42 | 3,29 |
| MgO | 0,36 | 0,36 | 0,34 |
| Fe₂O₃ | 0,16 | 0,16 | 0,15 |
| Sinterbedingungen | 5h/1440°C | 5h/1440°C | 5h/1440°C |

| Al₂TiO₅-Gehalt [Gew.-%] | | | |
|---|---|---|---|
| gebrannt | 92 | 88 | 90 |
| Zerfallstest oxidierend | 76 | 47 | 6 |
| Zerfallstest reduzierend | 85 | 69 | 25 |

An den Versätzen der Beispiele 3 und 4 wurden folgende Eigenschaften gemessen:

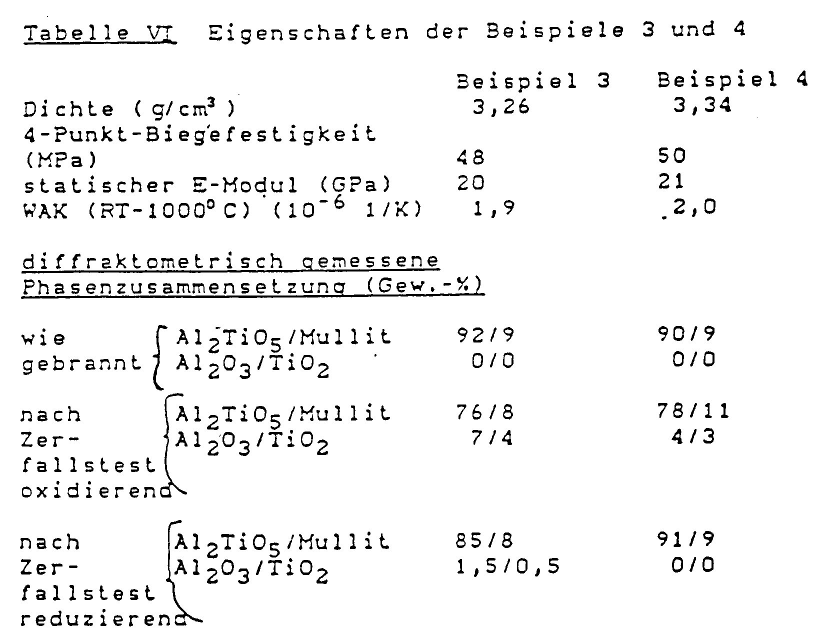

## Patentansprüche

1. Sinterformkörper auf der Basis der Hauptphasen dotiertes Aluminiumtitanat und Mullit mit einer Zusammensetzung von
50 - 61,5 Gew.-% Al₂O₃,
36 - 47,5 Gew.-% Titanoxid, berechnet als TiO₂,
2,5 - 5 Gew.-% SiO₂,
wobei die Summe dieser drei Komponenten 100 % ergibt und bis zu 1 Gew.-% Verunreinigungen, und wobei der Sinterformkörper zusätzlich 0,3 - 0,6 Gew.-% MgO enthält und zusätzlich einen Eisenoxidgehalt von 0,015 bis 0,5 Gew.-%, berechnet als Fe₂O₃, aufweist, der aus eisenhaltigen Schicht-Silikaten stammt, und die Summe der Gehalte an unreagiertem Al₂O₃ und TiO₂ ≤ 2,5 Gew.-% in dem Sinterformkörper beträgt.

2. Sinterformkörper gemäß Anspruch 1, dadurch gekennzeichnet, daß der Eisenoxidgehalt des Sinterformkörpers 0,05 bis 0,4 Gew.-%, berechnet als Fe₂O₃, beträgt.

3. Sinterformkörper gemäß Anspruch 2, dadurch gekennzeichnet, daß das Verhältnis der Gew.-% von MgO/Fe₂O₃ zwischen 20 und 2 beträgt.

4. Verfahren zur Herstellung der Sinterformkörper gemäß einem oder mehreren der Ansprüche 1 bis 3, dadurch gekennzeichnet, daß es das Mischen, die Formgebung und das Sintern geeigneter Materialien umfaßt und der Sinterformkörper bei Temperaturen zwischen 1250 und 1600°C, bevorzugt zwischen 1300 und 1450°C, mit einer Haltezeit zwischen 0,5 und 100 h, bevorzugt zwischen 1 und 50 h, gesintert wird.

5. Verfahren zur Herstellung der Sinterformkörper gemäß Anspruch 4, dadurch gekennzeichnet, daß die Komponenten einzeln oder als Mischung mittels Naßmahlung, bevorzugt mittels Perlmahlung, vordispergiert werden und die Mischung der naßgemahlenen Komponenten anschließend mittels Granulationstrocknung, bevorzugt mittels Sprühtrocknung, weiter verarbeitet und als Rohstoff verwendet wird.

6. Verfahren gemäß einem der Ansprüche 4 oder 5, dadurch gekennzeichnet, daß der Sinterformkörper reaktionsgesintert wird.

7. Verfahren gemäß einem der Ansprüche 5 bis 6, dadurch gekennzeichnet, daß die Magnesiumverbindungen als Magnesiumtitanate wie Mg₂TiO₄, MgTiO₃ und/oder MgTi₂O₅ eingebracht werden.

8. Verfahren nach einem oder mehreren der Ansprüche 4 bis 7, dadurch gekennzeichnet daß eisenhaltige Schicht-Silikate in Form von eisenhaltigen Tonen oder Kaolin in die Mischung eingebracht werden.

9. Verwendung der Sinterformkörper gemäß einem oder mehreren der Ansprüche 1 bis 3 zur Herstellung von hohlen rohrartigen Metall-Keramik-Verbundkörpern.

10. Verwendung der Sinterformkörper gemäß einem oder mehreren der Ansprüche 1 bis 3 zur Bewehrung von Motorkolben und Zylinderkopf und als Einbauelement im Katalysator.

11. Verwendung der Sinterformkörper gemäß einem oder mehreren der Ansprüche 1 bis 3, gegebenenfalls nach Dotierung mit katalytisch wirkenden Substanzen, als Katalysatorträger.

12. Verwendung der Sinterformkörper gemäß einem oder mehreren der Ansprüche 1 bis 3, gegebenenfalls nach Dotierung mit katalytisch wirkenden Substanzen und Zusatz von Porosierungshilfen, als Filter, insbesondere als Partikelfilter im Dieselmotor.

13. Verwendung der Sinterformkörper gemäß einem oder mehreren der Ansprüche 1 bis 3 als Werkstoff in der Schmelzmetallurgie.

## Claims

1. Sintered mouldings based on the main phases of doped aluminium titanate and mullite having the composition
50-61.5 wt.% Al₂O₃,
36 to 47.5 wt.% titanium dioxide, calculated as TiO₂,
2.5-5 wt.% SiO₂,
wherein the sum of these three components amounts to 100% and up to 1 wt.% of impurities and wherein the sintered moulding additionally contains 0.3-0.6 wt.% MgO and additionally has an iron oxide content of 0.015 to 0.5 wt.%, calculated as Fe₂O₃, which originates from phyllosilicates containing iron, and the sum of the contents of unreacted Al₂O₃ and TiO₂ in the sintered moulding amounts to ≤2.5 wt.%.

2. Sintered mouldings according to claim 1, characterised in that the iron oxide content of the sintered moulding is 0.05 to 0.4 wt.%, calculated as Fe₂O₃.

3. Sintered mouldings according to claim 2, characterised in that the ratio of weight percentages of MgO to Fe₂O₃ is between 20 and 2.

4. Process for the production of the sintered mouldings according to one or more of claims 1 to 3, characterised in that it comprises mixing, shaping and sintering of suitable materials and the sintered moulding is sintered at temperatures of between 1250 and 1600°C, preferably between 1300 and 1450°C with a holding time of between 0.5 and 100 h, preferably of between 1 and 50 h.

5. Process for the production of the sintered mouldings according to claim 4, characterised in that the components are predispersed individually or as a mixture by means of wet grinding, preferably by means of bead grinding, and the mixture of the wet-ground components is then further processed by granulation drying, preferably by means of spray drying, and is used as a raw material.

6. Process according to one of claims 4 or 5, characterised in that the sintered moulding is reaction-sintered.

7. Process according to one of claims 5 to 6, characterised in that the magnesium compounds are introduced as magnesium titanates, such as Mg₂TiO₄, MgTiO₃ and/or MgTi₂O₅.

8. Process according to one or more of claims 4 to 7, characterised in that the phyllosilicates containing iron are introduced into the mixture in the form of clays or kaolin containing iron.

9. Use of the sintered mouldings according to one or more of claims 1 to 3 for the production of hollow tubular metal/ceramic composite articles.

10. Use of the sintered mouldings according to one or more of claims 1 to 3 for reinforcing engine pistons and cylinder heads and as an insert in a catalyst.

11. Use of the sintered mouldings according to one or more of claims 1 to 3, optionally after doping with catalytically active substances, as catalyst supports.

12. Use of the sintered mouldings according to one or more of claims 1 to 3, optionally after doping with catalytically active substances and addition of porosity auxiliaries, as filters, in particular as particle filters in diesel engines.

13. Use of the sintered mouldings according to one or more of claims 1 to 3 as a material in melt metallurgy.

## Revendications

1. Corps fritté à base des phases principales titanate d'aluminium dopé et mullite, de composition suivante :
50 à 61,5 % en poids d'Al₂O₃,
36 à 47,5 % en poids d'oxyde de titane, exprimé en TiO₂,
2,5 à 5 % en poids de SiO₂,
la somme de ces trois composants représentant 100 %, et jusqu'à 1 % en poids d'impuretés, et le corps fritté contenant en outre de 0,3 à 0,6 % en poids de MgO et présentant en outre une teneur en oxyde de fer, provenant de silicates lamellaires contenant du fer, de 0,015 à 0,5 % en poids, calculée en Fe₂O₃, et la somme des teneurs en Al₂O₃ n'ayant pas réagi et en TiO₂ étant ≤ 2,5 % en poids dans le corps fritté.

2. Corps fritté selon la revendication 1, caractérisé en ce que sa teneur en oxyde de fer est de 0,05 à 0,4 % en poids, calculée en Fe₂O₃.

3. Corps fritté selon la revendication 2, caractérisé en ce que le rapport des pourcentages en poids de MgO/Fe₂O₃ se situe entre 20 et 2.

4. Procédé de préparation des corps frittés selon une ou plusieurs des revendications 1 à 3, caractérisé en ce qu'il comprend le mélange, le façonnage et le frittage de matières appropriées et que le corps fritté est fritté à des températures de 1 250 à 1 600°C, de préférence de 1 300 à 1 450°C en une durée de 0,5 à 100 h, de préférence de 1 à 50 h.

5. Procédé de préparation des corps frittés selon la revendication 4, caractérisé en ce que l'on soumet les composants, individuellement ou à l'état de mélanges, à dispersion préalable par broyage au mouillé, de préférence dans un broyeur à perles, puis qu'on soumet le mélange des composants ayant subi le broyage au mouillé à une opération de séchage-granulation, de préférence de séchage-atomisation et qu'on utilise le produit obtenu en tant que matière première.

6. Procédé selon une des revendications 4 ou 5, caractérisé en ce que le corps est obtenu par frittage réactif.

7. Procédé selon une des revendications 5 à 6, caractérisé en ce que l'on incorpore les dérivés du magnésium à l'état de titanates de magnésium tels que Mg₂TiO₄, MgTiO₃ et/ou MgTi₂O₅.

8. Procédé selon une ou plusieurs des revendications 4 à 7, caractérisé en ce que l'on introduit dans le mélange des silicates lamellaires contenant du fer sous forme d'argiles ou de kaolin contenant du fer.

9. Utilisation des corps frittés selon une ou plusieurs des revendications 1 à 3 pour la fabrication de corps composites tubulaires creux métal-céramique.

10. Utilisation des corps frittés selon une ou plusieurs des revendications 1 à 3 pour la protection des pistons de moteurs et des têtes de cylindres et en tant qu'éléments de construction interne de catalyseurs.

11. Utilisation des corps frittés selon une ou plusieurs des revendications 1 à 3, éventuellement après dopage par des substances à activité catalytique, en tant que supports de catalyseurs.

12. Utilisation des corps frittés selon une ou plusieurs des revendications 1 à 5, éventuellement après dopage par des substances possédant une activité catalytique et adjonction de produits auxiliaires provoquant la porosité, en tant que filtres, en particulier en tant que filtres à particules, dans un moteur diesel.

13. Utilisation des corps frittés selon une ou plusieurs des revendications 1 à 5 en tant que matériaux en fonderic.
